# EUROPEAN PATENT SPECIFICATION

(11) **EP 2 601 419 B1**
(45) Date of publication and mention of the grant of the patent: **31.05.2017**
(21) Application number: 11814180.3
(22) Date of filing: 02.08.2011
(51) Int. Cl.: F16B 31/02

(54) **APPARATUS FOR TIGHTENING THREADED FASTENERS**
VORRICHTUNG ZUM ANZIEHEN VON BEFESTIGUNGSSCHRAUBEN
APPAREIL POUR SERRER DES ÉLÉMENTS DE FIXATION FILETÉS

(30) Priority: 02.08.2010 US 370015 P
(43) Date of publication of application: 12.06.2013
(73) Proprietor: Jetyd Corp., South Hackensack, NJ 07606 (US)
(72) Inventor: DOLAN, Michael, F., Kenilworth, NJ 07016 (US)
(74) Representative: Westphal, Mussgnug & Partner Patentanwälte mbB
(86) International application number: PCT/IB2011/002658
(87) International publication number: WO 2012/017331

(56) References cited:
- EP-A2- 0 287 381
- WO-A1-2007/022293
- DE-U1- 9 411 853
- FR-A1- 2 930 805
- GB-A- 556 145
- GB-A- 2 037 390
- GB-A- 2 329 947
- GB-A- 2 361 043
- US-A1- 2003 209 113
- US-A1- 2005 098 000
- US-B1- 6 220 801

## Description

Innovations disclosed in this Application advance technology disclosed in the following commonly owned issued patents and patent applications: U.S. Patent No. 5,137,408, having Filing Date of December 3, 1991, entitled "Fastening Device"; U.S. Patent No. 5,318,397, having Filing Date of May 7, 1992, entitled "Mechanical Tensioner"; U.S. Patent No. 5,622,465, having Filing Date of April 26, 1996, entitled "Lock Nut"; U.S. Patent No. 5,640,749, having Filing Date of June 13, 1995, entitled "Method Of And Device For Elongating And Relaxing A Stud"; U.S. Patent No. 5,888,041, having Filing Date of October 17, 1997, entitled "Lock Nut"; U.S. Patent No. 6,254,322, having Filing Date of March 3, 1998, entitled "Bolt With A Bolt Member, A Washer And A Sleeve For Applying Forces To The Bolt Member And The Sleeve"; et al.

DE 94 11 853 U1, US 6 220 801 B1, EP 0 287 381 A1 and FR 2 930 805 A1 disclose further examples of apparatuses for tightening threaded fasteners.

### Description of Invention

Conventional threaded fasteners are known. They include a head connected to an end of a shank (screw) or, a nut which is threadedly engagable with an end of the shank (stud and nut combination). Fasteners are inserted in a hole of an object to be tensioned, for example two adjoining flanges to be connected with one another.

During tightening of conventional threaded fasteners galling frequently occurs. Pressure builds between contacting and sliding thread surfaces; protective coatings and manufacturing imperfections on thread surfaces, if any, clump, are broken and/or wipe off; and/or metal interface points shear or lock together. This cumulative clumping-clogging-shearing-locking action causes increasing adhesion. Often galling leads to seizing - the actual freezing together of the threads. If tightening is continued, the fastener can be twisted off or its threads ripped out.

Galling also occurs not just between the threads of the bolt and the nut, but also between the face of the nut and the face of the flange in which the fastener is introduced, since the side load changes a perpendicular position of the nut to be turned. This in turn increases the turning friction of the nut and makes the bolt load generated by the torque unpredictable which can result in leaks or joint failures.

Furthermore, conventional threaded fasteners tend to be rigid and fail at the bottom of the nut in the first two or three threads due to uneven hoop stresses. The last two or three stud or bolt threads hold 80% of the load of conventional fasteners. If the fastener fails it's typically those threads. This led to biasing the nut inner diameter to load the top threads first during tightening. As the nut tightens, it deforms and evenly distributes load.

Creep or deformation of conventional fasteners occurs when the fastener metal flows under stress. The amount of creep sustained tends to increase with temperature. Once the tightening is completed, however, it is important that no further flow occurs since such deformation will lead to a reduction in bolt extension and subsequently the stress acting on the flange/gasket/joint. A high rate of leakage will likely occur if this stress is reduced to below a certain minimum.

Heating and quenching in the form of heat treatment achieves surface conditioning of conventional fasteners. Conventional fasteners, however, often become very brittle and break easily when surface conditioned.

Conventional threaded fasteners often incorporate washers. The force under the head of a bolt or nut can exceed, at high preloads, the compressive yield strength of the clamped material. If this occurs excessive embedding and deformation can result in bolt preload loss. To overcome this, washers under the bolt head may be used to distribute the force over a wider area into the clamped material.

In contrast to conventional threaded fasteners, three-piece threaded fasteners, including, bolts, studs, clamps and/or washers, etc., consisting of an outer sleeve, inner sleeve and washer are also known in the art. A spline connection on the washer rotationally couples the inner sleeve with the washer. During tightening, a torque power tool is deployed to divert a reaction force to the inner sleeve that has greater turning friction and the action force to the outer sleeve that has lower turning friction. The outer sleeve starts turning, pulling up the inner sleeve, to a pre-calibrated tension, and thus the nut or bolt along with it. Tightening three-piece fasteners is torsion- and side load- free. As turning takes place on its precision-machined surfaces, the coefficient of friction is known to a load accuracy of ± 3% with a given lubricant. No reaction point is required because the tool reacts against the replacement fastener so it can be used in very limited access situations and operated hands-free, remotely or upside down. Three-piece threaded fasteners have similar dimensions as the conventional nut or bolt which it replaces.

Thread galling and metals creep is nearly eliminated with three-piece threaded fasteners because mating bolts or studs are loaded in pure tension without twisting. Three-piece fasteners increase the elasticity of the bolting system, which significantly help to keep a joint held together. This is particularly advantageous in high-temperature bolting applications where fasteners are subject to creep, because elastic bolting systems will take longer to reach a given relaxation stress than in a rigid system. Elastic bolting systems can also improve the integrity of gasketed joints by compensating for temperature changes, joint movement and changes in internal pressure. And hoop stresses on the outer sleeve cause an increase in inner sleeve diameter at its bottom and decrease at its top. This distributes thread stress more evenly and reduces the likelihood that the stud or bolt will fail.

Three-piece threaded fasteners: cover a wide range of sizes, thread forms, temperature ratings and applications; are typically specified for applications with minimal radial constraints; have outside diameters approximately the cross corner dimension of a standard heavy hex nut; virtually eliminates galling due to the difference in hardness between the inner and outer sleeves; and, with their through bolt design, are an appropriate choice for applications with high stud extensions. The power tool reacts all around the non-rotating washer without side loads. The relatively thick outer sleeve minimizes stresses and allows them to handle high loads at elevated temperatures. The castellated outer sleeve eliminates need for oversize socket drives.

The biggest advantage of three-piece fasteners is that they do not gall due to material chemistry and difference in hardness of the inner and outer sleeves. One approach includes hardening the outer sleeve and leaving the inner sleeve relatively soft. During tightening, the inner sleeve tends to expand but the outer sleeve compresses it, which keeps the system in equilibrium and avoids failure. The stud/bolt on its inner surface and the outer sleeve on its outer surface hold the inner sleeve captive.

Three-piece fasteners exhibit shortcomings on high temperature applications above approximately 535ºC (1000ºF). System thermal expansion and stress requires decreased fastener loads or increased fastener radial dimensions, neither of which may be possible on a given application. Furthermore, creeping strain starts slow then accelerates. The outer sleeve tends to bulge on three-piece fasteners with low outer sleeve thicknesses, often necessary to fit in constrained application geometries.

Additionally, self-reacting three-piece fasteners typically have features such as spline, hex or square to allow a torsion coupling with the reaction member of the torque input device. This is achieved with machined rotational interferences between two parts. The interference is typically created with a male and female engagement between any two mating features that prevent rotation between the two parts.

Three-piece mechanical tensioning stud devices also exist in the prior art. They consist of a stud, nut and washer. The stud has external threads on both ends. Under the upper thread the stud will also have a spline or other geometry to create a rotational coupling with the inner diameter of the washer. The topside of the stud will also have a spline or other geometry to allow rotational coupling with the reaction shaft of the torque input device. The nut is internally threaded to mate with the threads on the topside of stud. The nut will have a spline or other geometry to allow the introduction of torque from torque input device. The washer has an internal geometry that will mate rotationally with the spline or other geometry under the top thread of the stud.

In bolting applications stresses are typically near the elastic limits of the materials. The reaction feature that couples the three-piece mechanical tensioning stud to the torque of the torque input device typically has to be oversized to prevent elastic material failures. Therefore it is not possible with prior art to carry the high magnitude of torque with an internal feature such as a square, hexagon or internal spline hole in the top surface of the stud. Consequently prior art applications that are subject to high bolting stress must have an external feature on the topside of the stud that will allow the coupling of a sufficiently sized reaction shaft from the torque device.

The present invention has therefore been devised to address these issues.

According to an aspect of the invention we provide an apparatus for torsionally coupling a threaded fastener and a torque output device including: -
a first coupling member:
rotatably and threadedly engagable with the threaded fastener;
rotatably and taperedly engagable with a second coupling member;
non-rotatably engagable with an action portion of the torque output device;
the second coupling member non-rotatably engagable with a reaction portion of the torque output device; and
wherein the first coupling member, has an upper surface with a locking means that is non-rotatably engagable with the action portion of the torque output device, and when rotated by the action portion of the torque output device, applies a load to the threaded fastener.

Advantageously, apparatus with alternative geometries for torsion coupling allow for: more efficiently and evenly distributed load stress distribution; higher torsion strength; and lower fastener mass and volume.

The invention may be described by way of example only with reference to the accompanying drawings, of which:
Figure 1 is a perspective view of an embodiment of the present invention;
Figure 2 is a side, cross-sectional view of an embodiment of the present invention;
Figure 3 is a top view of an embodiment of the present invention;
Figure 4 is a side, cross-sectional view of an embodiment not belonging to the present invention; and
Figure 5 is a perspective view of an embodiment not belonging to the present invention.

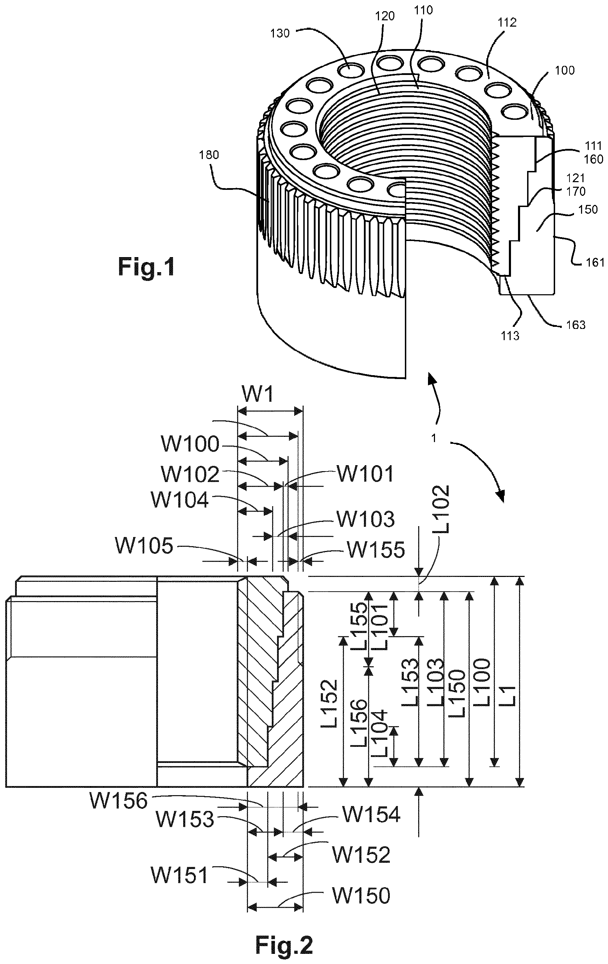

Referring to FIGs. 1-3 by way of example, this shows an apparatus 1 for torsionally coupling a torque output device (not shown) and a threaded fastener (not shown) in accordance with a first embodiment. Apparatus 1 has a first coupling member 100: rotatably and threadedly engagable with the threaded fastener; rotatably and taperedly engagable with a second coupling member 150; and non-rotatably engagable with an action portion of the torque output device. Second coupling member 150 is non-rotatably engagable with a reaction portion of the torque output device. First coupling member 100, when rotated by the action portion of the torque output device, applies a load to the threaded fastener to close a joint (not shown).

First coupling member 100 is an annular body and, as shown in FIGs. 1-3, formed as a sleeve. It has an inner surface 110 with inner thread means 120 engagable with outer thread means of the threaded fastener of the joint, for example a bolt or stud. It further has an outer surface 111 with a polygonal formation 121 which is rotatably engagable with an inner surface 160 with a polygonal formation 170 of second coupling member 150. Polygonal formation 121 is shaped as an inverted frustum of a stepped cone. It further has a lower surface 113 which is rotatably engagable with inner surface 160 with polygonal formation 170 of second coupling member 150.

An external cylindrical feature is removed from first coupling member 100 at a shallow depth. Successive external cylindrical features are removed at regular length and width intervals. Each successive feature starts where the preceding feature stops. The geometric pattern of removed external cylindrical features continues until space restricts the addition of another external cylindrical feature. FIGs. 1-3 show four external cylindrical features removed at regular length and width intervals. Note that the quantity, dimensions, geometries and intervals of removed external cylindrical features may vary depending on the application to optimize the formed coupling. Varying the quantity, dimensions, geometries and intervals from one removed external cylindrical feature to the next varies the nominal angle of polygonal formation 121. The step length may be sized infinitely small to create a smooth taper. Alternatively external portions of first coupling member 100 may be removed in one step to form a smooth conical outer surface.

First coupling member 100 further has an upper surface 112 with a locking means *130* which may be formed by a plurality of bores extending in an axial direction and spaced for one another in a circumferential direction. Locking means 130 may be formed by any suitable geometry, for example castellation. Locking means 130 non-rotatably engages with the action portion of the torque output device.

Second coupling member 150 is an annular body and, as shown in FIGs. 1-3, formed as a sleeve. It is shaped as a hollow frustum of a stepped cone. An internal cylindrical feature is removed from second coupling member 150 at a shallow depth. Successive internal cylindrical features are removed at regular length and width intervals. Each successive feature starts where the preceding feature stops. The geometric pattern of removed internal cylindrical features continues until space restricts the addition of another internal cylindrical feature.

FIGs. 1-3 show four internal cylindrical features removed at regular length and width intervals. Note that the quantity, dimensions, geometries and intervals of removed internal cylindrical features may vary depending on the application to optimize the formed coupling. Varying the quantity, dimensions, geometries and intervals from one removed internal cylindrical feature to the next varies the nominal angle of the conical shape these features form. The step length may be sized infinitely small to create a smooth taper. Alternatively internal portions of first coupling member 100 may be removed in one step to form a smooth conical inner surface.

FIG. 2 shows dimensions of apparatus 1. Generally, at any given cross-sectional length of first and second coupling members 100 and 150 (L₁₀₀ and L₁₅₀) the cross-sectional widths (W₁₀₀ and W₁₅₀) will be substantially similar.

Second coupling member 150 has inner surface 160 with polygonal formation 170 rotatably engagable with outer surface 111 with polygonal formation 121 of first coupling member 100. Polygonal formation 170 is shaped as a frustum of a stepped cone. Inner surfaces 110 and 160 are substantially smooth.

Second coupling member 150 further has a locking means 180 which is formed by a plurality of outer spines extending in an axial direction and spaced from one another in a circumferential direction. Locking means 180 non-rotatably engages with inner spines of the reaction portion of the torque output device.

Second coupling member 150 further has a lower surface 163 which rests on an upper surface of the joint. Lower surface 163 may be substantially rough and may be made in many different ways, for example by a plurality of ridges, ripples or teeth.

Apparatus 1 operates in the following manner. Second coupling member 150 is applied over the threaded fastener and rests on the upper surface of the joint. First coupling member 100 is applied on the threaded fastener by screwing the first coupling member 100 until its outer surface 111 is flush with inner surface 160 of second coupling member. Then, the action portion of the torque output device engages locking means 130 of first coupling member 100. The reaction portion of the torque output device engages locking means 180 of second coupling member 150. The action portion of the torque output device rotates first coupling member 100. During rotation of first coupling member 100, it: slides on the smooth interface between its outer surface 111 and inner surface 160 of second coupling member; and turns around the threaded fastener, which is stretched to a predetermined load, to tighten the joint. Simultaneously, second coupling member 150: embeds itself, via lower surface 163, on the upper surface of the joint; and, together with the reaction portion of the torque output device does not turn. When the threaded fastener is sufficiently stretched (tightened), the torque output device is disengaged.

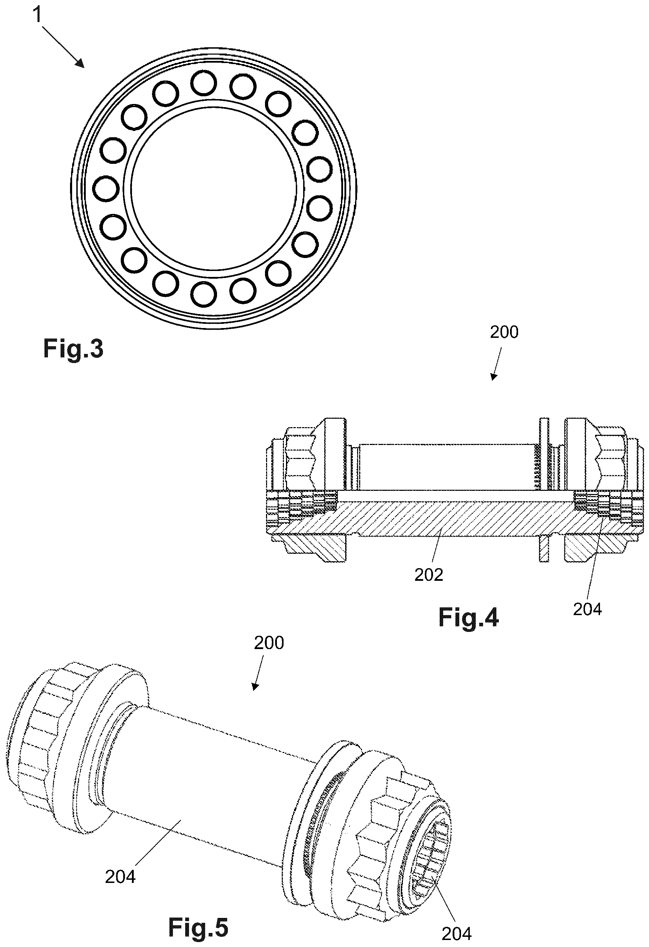

FIGs. 4-5 show an apparatus for torsionally coupling a threaded fastener and a torque output device not belonging to the present invention.

A conical geometry for torsional coupling of a threaded fastener and a torque output device yields a better load stress distribution. This embodiment introduces a low profile coupling geometry that will allow a torsion-coupling feature on the top of a stud to be formed internally by distributing stresses more evenly and therefore allowing for a more efficient packaging of the coupling features.

A stepped 12-point hole in the top surface of the stud is used for torsion coupling with a three-piece mechanical stud-tensioning device. An internal 12-point feature is placed in the top of the stud at a shallow depth. Successive 12-point features are progressively added at smaller 12-point sizes each at shallow depths and each starting where the preceding 12-point stopped. The pattern of decreasing 12-point geometry will decrease until space restricts the addition of another 12 point. Varying the depth and size change from one 12-point feature to the next will increase or decrease the nominal angle of the conical shape these features form. A shaft with external matching features for each of the steps will allow for evenly distributed stress distribution and high torsion strength while decreasing the mass and volume of the studs. The 12-point feature can be substituted with any geometry that will prevent rotation between the two parts. The step depth can be sized infinitely small to create a smooth taper. Mixed step sizes and geometries can be used to optimize production of such a coupling.

In standard bolting industry terms, apparatus 1 includes a nut (first coupling member 100) as an inner sleeve and a washer (second coupling member 150) as an outer sleeve. The standard bolting flat surface nut and washer interface is changed. The torque reaction point is moved upwards, as compared to conventional three-piece fasteners. Apparatus of the present invention utilize the geometry of conventional three-piece fasteners, which allows for surface conditioning of the outer sleeve to prevent galling, leveraged with a conventional nut and washer arrangement, which retains radial strain such that the inner sleeve may be surface conditioned with minimal risk of fracture.

Note that various types of components of apparatus of the present invention may be used, including: fastener categories, for example wood screws, machine screws, thread cutting machine screws, sheet metal screws, self drilling SMS, hex bolts, carriage bolts, lag bolts, socket screws, set screws, j-bolts, shoulder bolts, sex screws, mating screws, hanger bolts, etc.; head styles, for example flat, oval, pan, truss, round, hex, hex washer, slotted hex washer, socket cap, button, etc.; drive types, for example phillips and frearson, slotted, combination, socket, hex, allen, square, torx, multiple other geometries, etc.; nut types, for example hex, jam, cap, acorn, flange, square, torque lock, slotted, castle, etc.; washer types, for example flat, fender, finishing, square, dock, etc.; and thread types, for example sharp V, American national, unified, metric, square, ACME, whitworth standard, knuckle, buttress, single, double, triple, double square, triple ACME, etc.

When used in this specification and claims, the terms "tapered", "taperedly" and variations thereof mean that the specified features, steps, quantities, dimensions, geometries and intervals may, from one end to another, either gradually, suddenly, step-wisely, and/or conically: be inconsistent, vary, narrow, diminish, decrease, get smaller, thin out, etc.

## Claims

1. An apparatus for coupling a threaded fastener and a torque output device including:
- a first coupling member (100)
rotatably and threadedly engagable with the threaded fastener;
rotatably and taperedly engagable with a second coupling member (150); non-rotatably engagable with an action portion of the torque output device;
- the second coupling member (150) non-rotatably engagable with a reaction portion of the torque output device;
**characterized in that** the first coupling member (100) has an upper surface (112) with a locking means (130) that is non-rotatably engagable with the action portion of the torque output device, and when rotated by the action portion of the torque output device, applies a load to the threaded fastener.

2. An apparatus according to claim 1 wherein the rotatably and taperedly engagement of the first and the second coupling members (100, 150) is shaped either as a frustum of a stepped cone or a frustum of a smooth cone.

3. An apparatus according to any preceding claim wherein the rotatably taperedly engagement of the first and the second coupling members (100, 150) is shaped as a frustum of a stepped cone with varied step quantities, dimensions, geometries and intervals.

4. An apparatus according to any preceding claim including:
wherein an inner surface (110) of the first coupling member (100) engages an outer surface of the threaded fastener;
wherein an inner surface (160) of the second coupling member (150) engages the outer surface (111) of and a bottom surface (113) of the first coupling member (100);
wherein the outer surface (161) of the second coupling member (150) engages the reaction portion of the torque output device; and
wherein a bottom surface (163) of the second coupling member (150) engages a surface of a joint to be closed.

5. An apparatus according to any preceding claim wherein the second coupling member (150) substantially surrounds the first coupling member (100).

6. An apparatus according to any preceding claim wherein the torque output device is either pneumatically, electrically, hydraulically or manually driven.

## Patentansprüche

1. Vorrichtung zum Kuppeln einer Befestigungsmittel und einer Drehmoment-Abgabevorrichtung, enthaltend:
- ein erstes Kupplungselement (100),
welches drehbar und in Gewindeeingriff mit der Befestigungsmittel bringbar ist;
drehbar und sich verjüngend mit einem zweiten Kupplungselement (150) in Eingriff bringbar ist;
nicht drehbar mit einem Aktionsabschnitt der Drehmoment-Abgabevorrichtung in Eingriff bringbar ist; wobei
- das zweite Kupplungselement (150) nicht drehbar mit einem Reaktionsabschnitt der Drehmoment-Abgabevorrichtung in Eingriff bringbar ist;
**dadurch gekennzeichnet, dass** das erste Kupplungselement (100) eine obere Oberfläche (112) mit einem Verschlussmittel (130) aufweist, welches nicht drehbar in Eingriff mit dem Aktionsabschnitt der Drehmoment-Abgabevorrichtung bringbar ist, und das erste Kupplungselement (100) eine Belastung auf die Befestigungsmittel aufbringt, wenn es vom Aktionsabschnitt der Drehmoment-Abgabevorrichtung gedreht wird.

2. Vorrichtung nach Anspruch 1, wobei der drehbare und sich verjüngende Eingriff des ersten und des zweiten Kupplungselements (100, 150) entweder als ein Kegelstumpf eines gestuften Kegels oder als ein Kegelstumpf eines glatten Kegels geformt ist.

3. Vorrichtung nach einem der vorherigen Ansprüche, wobei der drehbare, sich verjüngende Eingriff des erste und des zweiten Kupplungselements (100, 150) als ein Kegelstumpf eines gestuften Kegels mit variierenden Stufenanzahlen, Dimensionen, Geometrien und Intervallen geformt ist.

4. Vorrichtung nach einem der vorherigen Ansprüche, enthaltend:
wobei eine innere Oberfläche (110) des ersten Kupplungselements (100) in eine äußere Oberfläche der Befestigungsmittel eingreift;
wobei eine innere Oberfläche (160) des zweiten Kupplungselements (150) in die äußere Oberfläche (111) und eine Bodenfläche (113) des ersten Kupplungselements (100) eingreift,
wobei die äußere Oberfläche (161) des zweiten Kupplungselements (150) in den Reaktionsabschnitt der Drehmoment-Abgabevorrichtung eingreift, und
wobei eine Bodenfläche (163) des zweiten Kupplungselements (150) in eine Oberfläche einer zu schließenden Verbindung eingreift.

5. Vorrichtung nach einem der vorherigen Ansprüche, wobei das zweite Kupplungselement (150) im Wesentlichen das erste Kupplungselement (100) umschließt.

6. Vorrichtung nach einem der vorherigen Ansprüche, wobei die Drehmoment-Abgabevorrichtung entweder pneumatisch, elektrisch, hydraulisch oder manuell betrieben ist.

## Revendications

1. Appareil permettant de coupler un élément de fixation fileté et un dispositif de sortie de couple comprenant :
- un premier élément d'accouplement (100) :
pouvant être mis en prise par rotation et par vissage avec l'élément de fixation fileté,
pouvant être mis en prise par rotation et par conicité avec un second élément d'accouplement (150),
pouvant être mis en prise de façon non rotative avec une partie active du dispositif de sortie de couple,
- le second élément d'accouplement (150) pouvant être mis en prise de façon non rotative avec une partie réactive du dispositif de sortie de couple,
**caractérisé en ce que**
le premier élément d'accouplement (100) comporte une surface supérieure (112) équipée de moyens de blocage (130) qui peuvent être mis en prise de façon non rotative avec la partie active du dispositif de sortie de couple, et qui, lorsqu'ils sont mis en rotation par la partie active du dispositif de sortie de couple appliquent une charge sur l'élément de fixation fileté.

2. Appareil conforme à la revendication 1,
dans lequel la mise en prise par rotation et par conicité du premier élément d'accouplement et du second élément d'accouplement (100, 150) est réalisée sous la forme d'un tronc de cône à gradins, ou d'un tronc de cône lisse.

3. Appareil conforme à l'une quelconque des revendications précédentes,
dans lequel la mise en prise par rotation et par conicité du premier élément d'accouplement et du second élément d'accouplement (100, 150) est réalisée sous la forme d'un tronc de cône à gradins ayant des nombres de gradins, des dimensions, des géométries et des intervalles variables.

4. Appareil conforme à l'une quelconque des revendications précédentes,
dans lequel
la surface interne (110) du premier élément d'accouplement (100) vient en prise avec la surface externe de l'élément de fixation fileté,
la surface interne (160) du second élément d'accouplement (150) vient en prise avec la surface externe (111) et la surface inférieure (113) du premier élément d'accouplement (100),
la surface externe (161) du second élément d'accouplement (150) vient en prise avec la partie de réaction du dispositif de sortie de couple, et
la surface inférieure (163) du second élément d'accouplement (150) vient en prise avec une surface d'un joint devant être fermé.

5. Appareil conforme à l'une quelconque des revendications précédentes, dans lequel le second élément d'accouplement (150) entoure essentiellement le premier élément d'accouplement (100).

6. Appareil conforme à l'une quelconque des revendications précédentes, dans lequel le dispositif de sortie de couple est un dispositif pneumatique, électrique, hydraulique ou à commande manuelle.
